# FASCICULE DE BREVET EUROPEEN

(11) **EP 2 084 427 B1**
(45) Date de publication et mention de la délivrance du brevet: **29.09.2010**
(21) Numéro de dépôt: 07858743.3
(22) Date de dépôt: 27.11.2007
(51) Int. Cl.: F16H 7/24

(54) **DISPOSITIF DE MONTAGE D'UNE COURROIE MUNI D'UN SYSTEME DE FIXATION PAR BILLES**
MIT EINEM KUGELSPERRSYSTEM VERSEHENE GURTMONTAGEVORRICHTUNG
BELT ASSEMBLY DEVICE PROVIDED WITH A BALL LOCK SYSTEM

(30) Priorité: 01.12.2006 FR 0655247
(43) Date de publication de la demande: 05.08.2009
(73) Titulaire: Peugeot Citroën Automobiles Société Anonyme, 78140 Velizy Villacoublay (FR)
(72) Inventeur: DEBUIRE, Fabien, 95240 Cormeilles En Parisis (FR)
(74) Mandataire: Ménès, Catherine
(86) Numéro de dépôt international: PCT/FR2007/052405
(87) Numéro de publication internationale: WO 2008/065303

(56) Documents cités:
- JP-A- 9 242 834
- US-A- 5 653 654
- US-A1- 2003 176 248
- US-A1- 2003 211 910

## Description

Le domaine technique de l'invention concerne les dispositifs de montage d'une courroie élastique autour d'une poulie, comme, par exemple, une courroie accessoire d'un moteur de véhicule automobile, passant autour de la poulie vilebrequin. Plus particulièrement, l'invention se rapporte à un dispositif de montage d'une courroie élastique autour d'une poulie, comprenant un système d'accrochage lui permettant de venir se fixer sur ladite poulie.

Le document JP 09 242 834 qui représente l'état de la technique le plus proche décrit un dispositif selon le préambule de la revendication 1.

Les dispositifs de montage d'une courroie élastique autour d'une poulie existent déjà et ont fait l'objet de brevet. On peut, par exemple, citer la demande de brevet US 2003/0176248, qui se rapporte à un dispositif permettant de monter une ceinture élastique autour d'une poulie. Le dispositif est d'abord mis au contact de la poulie autour de laquelle est destinée à être engagée la ceinture, puis est mis en rotation manuellement, au moyen d'un bras de levier solidaire dudit dispositif pour engager la ceinture autour de ladite poulie. Ce brevet ne décrit aucun moyen particulier de fixation du dispositif de montage sur la poulie.

Le dispositif de montage selon l'invention, conçu pour engager une courroie élastique autour d'une poulie, comprend un système d'accrochage permettant de le solidariser ou de le désolidariser à ladite poulie, par une manipulation aisée et sans effort, d'un levier de commande solidaire dudit système. De cette manière, ce système d'accrochage ne requérant l'utilisation d'aucun outil extérieur, permet donc une installation souple, facile et rapide du dispositif de montage sur la poulie. Dans le cas où la poulie appartiendrait à un objet destiné à être monté sur une chaîne, la rapidité de mise en oeuvre du dispositif de fixation, engendrerait un gain de temps significatif sur la mise en place de la courroie autour de la poulie, et contribuerait à augmenter la cadence de traitement desdits objets.

La présente invention a pour objet un dispositif de montage d'une courroie élastique autour d'une poulie, comprenant des moyens mécaniques de guidage et de glissement de la courroie vers la poulie, ledit dispositif étant constitué par une pièce autonome apte à venir se fixer sur ladite poulie. La principale caractéristique du dispositif selon l'invention est qu'il comprend un système d'accrochage muni de butées périphériques, aptes à être libérées sous l'effet de l'actionnement d'un levier de commande, pour permettre l'insertion dudit système dans la poulie. En effet, en position de repos, les butées sont bloquées et émergent du système d'accrochage en augmentant son contour, empêchant l'insertion dudit système dans la poulie. En actionnant le levier, les butées sont libérées et le système peut alors être inséré dans l'emplacement de la poulie prévu à cet effet. Le terme « libérées » appliqué aux butées, signifie qu'elles ne sont plus bloquées et qu'elles peuvent se rétracter dans le système sous l'effet d'une pression externe.

Avantageusement, le levier est solidaire du système d'accrochage et peut être déplacé par un coulissement le long de son axe longitudinal, à partir d'une position d'équilibre. En effet, l'opérateur se saisit du dispositif de montage et, avant de l'insérer dans la poulie, tire vers lui le levier pour libérer les butées. De façon préférentielle, le système d'accrochage dispose de moyens internes permettant de maintenir le levier dans une position de repos, pour laquelle les butées sont sorties. Les expressions « position de repos » et « position d'équilibre » sont équivalentes.

Préférentiellement, le système d'accrochage est doté de moyens de rappel permettant au levier de revenir à sa position d'équilibre, ladite action ayant pour effet de faire émerger les butées du contour du système d'accrochage. De cette manière, l'opérateur, après avoir introduit le système d'accrochage dans la poulie, peut relâcher le levier, qui sous l'action des moyens de rappel, retrouve sa position d'équilibre en faisant émerger les butées. Lesdites butées, qui sont déployées à l'intérieur de la poulie, bloquent alors le dispositif de montage contre ladite poulie, sans possibilité de retrait. En exerçant une nouvelle traction sur le levier, il peut déverrouiller le système d'accrochage afin de désolidariser le dispositif de montage de la poulie.

Avantageusement, les moyens de rappel sont constitués par un ressort.

De façon avantageuse, le levier de commande comprend un corps cylindrique possédant, à l'une de ses extrémités, une tête élargie permettant de manipuler ledit levier, et possédant à son autre extrémité un embout élargi tronconique.

De façon préférentielle, les butées sont constituées par des billes, dont chacune est située à l'extrémité d'un canal dans lequel est placée une pièce relais de forme allongée, lesdits canaux étant situés dans un même plan transversal et disposés en position radiale par rapport à l'axe longitudinal du levier, le levier et lesdits canaux étant agencés de sorte que chaque pièce relais est à la fois au contact d'une bille et de l'embout élargi tronconique dudit levier. Lorsqu'une force extérieure est appliquée sur une bille qui émerge du système, le fait de tirer sur le levier, déplace notamment son embout élargi tronconique, qui, grâce à sa pente, permet à chaque ensemble formé par la bille et la pièce relais, de se rétracter dans le système d'accrochage. Cette force peut, par exemple, être provoquée par la paroi de l'évidement de la poulie prévue pour l'emplacement dudit système, au moment de son insertion dans ladite poulie. De façon avantageuse, les pièces relais sont constituées par des bâtonnets cylindriques dont la longueur est supérieure à celle des canaux dans lesquels ils sont logés.

Préférentiellement, chaque canal se termine par une partie évasée dans laquelle est logée la bille, ladite partie évasée présentant un étranglement distal, dont la largeur est inférieure au diamètre de la bille. Ainsi, en position de repos, chaque pièce relais en appui contre l'embout élargi, tend à repousser la bille contre ledit étranglement. La bille reste ainsi piégée dans la partie évasée, tout en pouvant émerger de ladite partie.

Avantageusement, le système d'accrochage comporte trois billes situées à l'extrémité de trois canaux équitablement répartis autour d'un cercle et faisant entre eux un angle de 120°. Cette configuration correspond à un compromis satisfaisant entre une bonne stabilité d'attache du système dans la poulie, et une géométrie simplifiée impliquant un nombre restreint de billes.

De façon préférentielle, le système d'accrochage comprend trois lobes aptes à venir s'insérer dans des évidements de la poulie, lesdits lobes étant traversés chacun par un canal radial possédant à son extrémité une bille. Autrement dit, le système d'accrochage vient se fixer sur la poulie par l'intermédiaire de trois points d'attache, et, lorsque le levier est tiré, les billes se rétractent au moment de leur contact avec la paroi des évidements.

De façon avantageuse, les billes et les pièces relais sont en acier.

Le dispositif de montage selon l'invention présente l'avantage d'être autonome, et de pouvoir ainsi être manipulé instantanément, sans l'utilisation d'outils extérieurs. De plus, la petite taille du levier de commande ainsi que sa faible amplitude de déplacement, confèrent au système d'accrochage du dispositif de montage selon l'invention, un caractère de grande ergonomie.

On donne ci-après une description détaillée d'un mode de réalisation préféré d'un dispositif de montage selon l'invention en se référant aux figures 1 à 9.
La figure 1 est une vue de face d'un dispositif de montage selon l'invention.
La figure 2 est une vue en perspective du dispositif de la figure 1 montrant sa face arrière.
La figure 3 est une vue en coupe transversale du dispositif de montage selon l'invention, détaillant notamment son système d'accrochage à la poulie.
La figure 4 est une vue en coupe longitudinale d'un dispositif de montage selon l'invention, au repos.
La figure 5 est une vue du dispositif de la figure 4 en fonctionnement.
La figure 6 est une vue agrandie en coupe longitudinale d'une partie du dispositif de montage selon l'invention, au repos.
La figure 7 est une vue agrandie en coupe longitudinale d'une partie du dispositif de montage selon l'invention, en fonctionnement.
La figure 8 est une vue schématisée de l'interaction entre le dispositif de montage selon l'invention et la poulie, lorsque les butées sont libérées.
La figure 9 est une vue schématisée de l'interaction entre le dispositif de montage selon l'invention et la poulie, lorsque les butées sont bloquées.

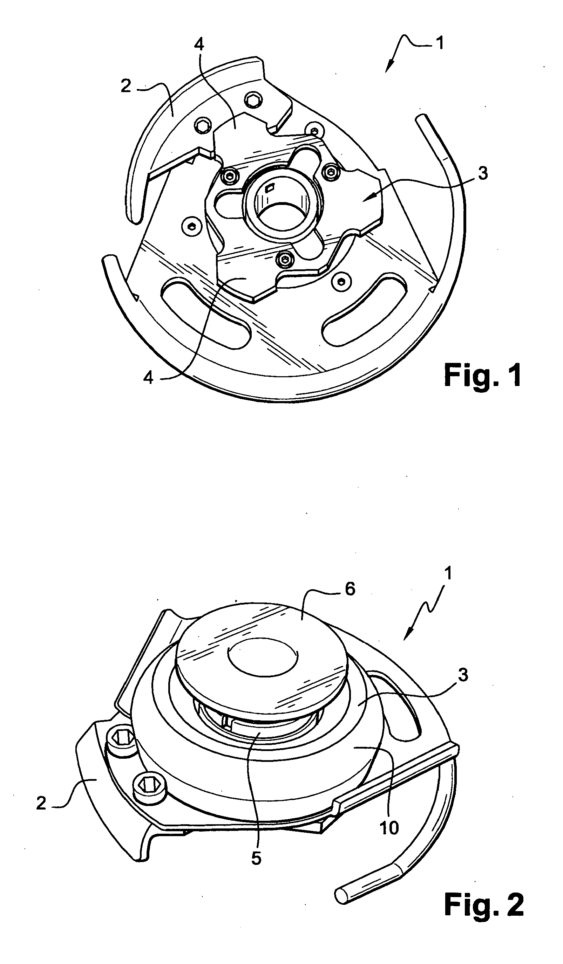

En se référant aux figures 1 et 2, un dispositif de montage 1 selon l'invention, comprend des moyens mécaniques 2 de guidage et de glissement conventionnels, ainsi qu'un système d'accrochage 3 permettant audit dispositif de se fixer à une poulie (20), autour de laquelle il est prévu d'installer une courroie élastique (la courroie et la poulie ne sont pas représentées sur les figures). Les moyens mécaniques 2 de guidage et de glissement peuvent, par exemple, être matérialisés par une piste 2 incurvée, associée à une rampe de retenue de la courroie et à une butée de section profilée, permettant de réduire progressivement la largeur de ladite piste. Par une rotation desdits moyens mécaniques 2, la courroie initialement placée sur la piste, va progressivement glisser latéralement pour se déporter de celle-ci et venir s'enrouler autour de la poulie 20. Le système d'accrochage 3 occupe une position sensiblement centrale au sein du dispositif de montage 1, et présente une partie interne comprenant les organes de fixations à la poulie, et une partie externe, directement accessible à l'opérateur et comportant les organes de manoeuvre dudit système 3.

En se référant à la figure1 montrant la partie interne du système d'accrochage 3, ledit système 3 possède notamment trois lobes 4 équitablement répartis autour d'un cercle, et faisant donc entre eux un angle de 120°. Ces lobes 4 constituent les organes de fixations du système d'accrochage 3 à la poulie 20, lesdits lobes 4 étant aptes à venir s'insérer dans la poulie 20.

En se référant à la figure 2 montrant la partie externe du système d'accrochage 3, les organes de manoeuvre dudit système 3 sont constitués par un levier 5 de commande, présentant une tête élargie 6 permettant à l'opérateur de manipuler facilement ledit levier 5. Le système d'accrochage 3 possède également une pièce intermédiaire 10 de maintien, permettant de le solidariser aux moyens mécaniques 2 de guidage et de glissement.

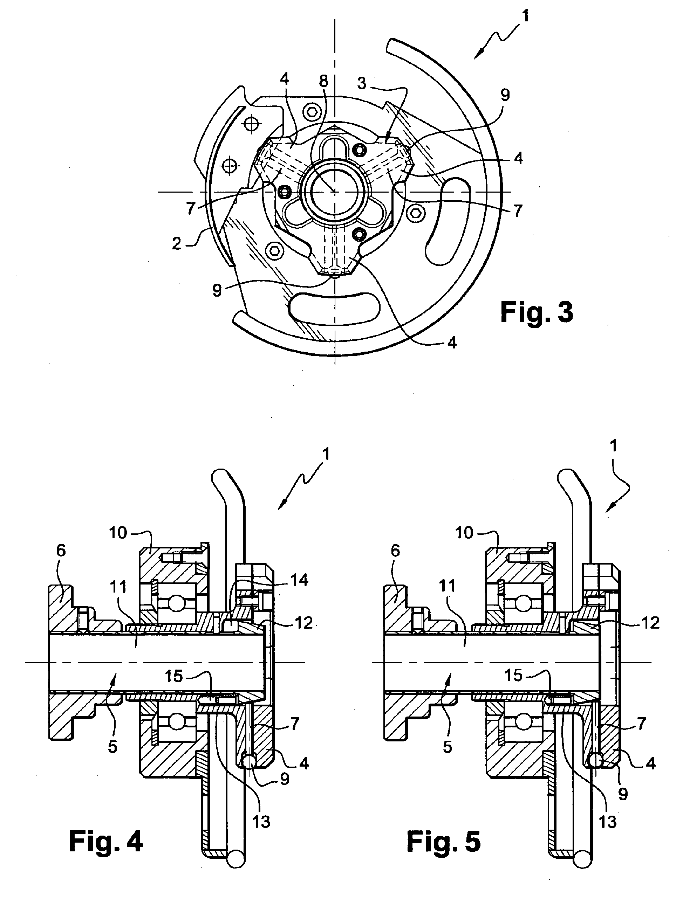

En se référant à la figure 3 présentant un plan de coupe transversale de la partie interne du système d'accrochage 3, chacun des lobes 4 est traversé par un canal 7 situé en position radiale par rapport à l'axe longitudinal 8 du levier 5 de commande. Ces canaux 7 sont disposés dans un même plan transversal par rapport audit axe longitudinal 8, et font donc entre eux un angle de 120°. Lesdits canaux 7 présentent chacun une extrémité libre occupée par une bille 9.

En se référant aux figures 4 et 5, un dispositif de montage 1 selon l'invention, est traversé longitudinalement par un levier 5 de commande possédant un corps cylindrique 11, dont une extrémité est composée de la tête élargie 6 qui émerge dudit système 1, et dont l'autre extrémité se termine par un embout 12 élargi tronconique. La pièce intermédiaire 10 de maintien est prolongée par une partie 13 cylindrique de plus faible diamètre et de même axe longitudinal, ladite partie 13 supportant les trois lobes 4 de fixation. La pièce intermédiaire 10 et la partie 13 de diamètre réduit sont traversées par un canal central destiné à recevoir le corps 11 du levier 5, ledit canal se terminant par une partie évasée 14, située à l'intérieur de la partie de diamètre réduit. Cette partie évasée 14 forme une chambre dans laquelle est positionné l'embout 12 élargi tronconique du corps 11 du levier 5. Un ressort 15 précontraint, dont l'axe longitudinal est parallèle à l'axe longitudinal du corps 11, vient en butée à la fois contre un épaulement interne du canal central et contre l'épaulement créé sur ledit corps 11 par l'embout élargi 12. Comme cela est montré sur la figure 4, ce ressort 15 a pour effet de maintenir éloigné l'embout élargi 12 du fond de la chambre 14. En se référant à la figure 5, lorsque l'opérateur tire sur le levier 5 pour faire coulisser le corps 11 dudit levier 5 dans le canal central, il déplace l'embout élargi 12 pour venir le mettre au contact du fond de la chambre 14, en comprimant un peu plus le ressort 15. Lorsque l'opérateur relâche la tête 6 du levier 5, le ressort 15 comprimé se détend et ramène ledit levier 5 à une position d'équilibre stable. Les canaux 7 traversant les lobes 4 et se terminant par une bille 9, relient la chambre 14 dans laquelle est positionné l'embout élargi 12 du levier 5 et l'extérieur desdits lobes 4.

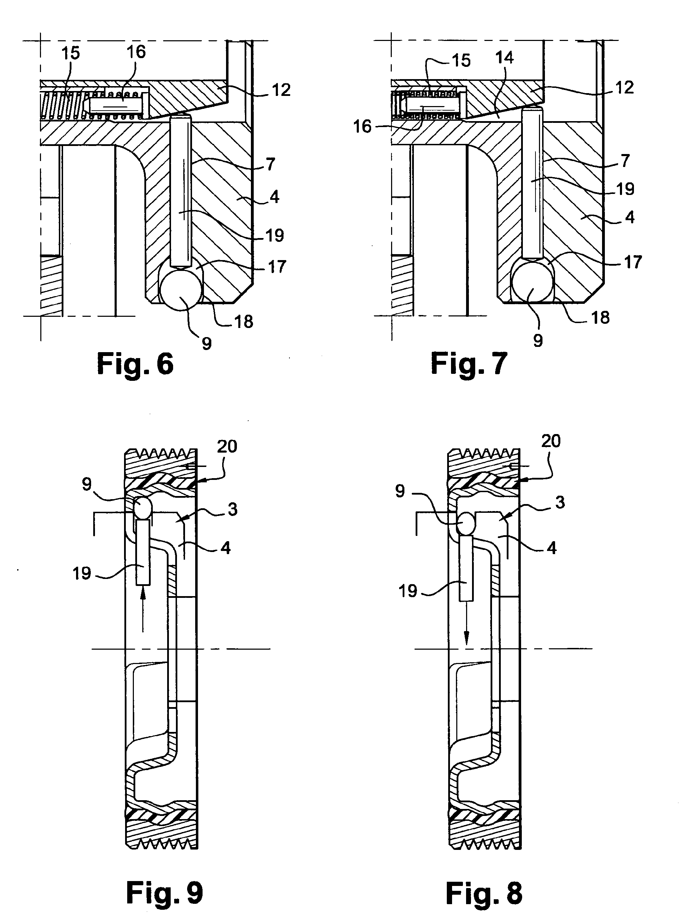

En se référant aux figures 6 et 7, l'embout élargi 12 présente un ergot 16 de guidage allongé, autour duquel vient s'enrouler le ressort 15. L'axe longitudinal de l'ergot 16 est parallèle à l'axe longitudinal du corps 11 du levier 5, ledit ergot 16 étant implanté au niveau de l'épaulement crée sur ledit corps 11 par l'embout élargi 12. Chacun des canaux 7 traversant les lobes 4, est cylindrique et présente, au niveau de son extrémité débouchant à l'extérieur dudit lobe 4, une partie évasée 17 dans laquelle est logée la bille 9. La partie cylindrique de chacun desdits canaux 7 est occupée par une pièce relais 19 assimilable à un bâtonnet cylindrique, dont la longueur est supérieure à la longueur de la partie cylindrique du canal 7 dans laquelle il est logé. La partie évasée 17 présente un étranglement distal 18 dont le diamètre est inférieur à celui de la bille 9. En se référant à la figure 6, lorsque le système d'accrochage 3 est au repos, tous ces éléments sont agencés de sorte que chaque bâtonnet 19 émerge à la fois dans la chambre 14 et dans la partie évasée 17 du canal 7 dans lequel il est logé, et vient en appui, d'une part, contre l'embout élargi 12 du corps 11 du levier 5, et, d'autre part, contre la bille 9 qui est repoussée contre l'étranglement 18 de ladite partie évasée 17. Dans cette configuration de blocage, les billes 9 émergent des parties évasées 17 dans lesquelles elles sont placées, et permettent d'accroître le contour du système d'accrochage 3. En se référant à la figure 7, lorsque l'opérateur fait coulisser le levier 5 de commande en comprimant un peu plus le ressort 15, l'embout élargi 12 se déplace longitudinalement dans la chambre 14, permettant, grâce à sa pente, de déplacer radialement le bâtonnet 19 vers le centre de ladite chambre 14, libérant ainsi la bille 9 dans la partie évasée 17.

En se référant aux figures 8 et 9, le mode de fonctionnement d'un dispositif de montage 1 selon l'invention suit les étapes suivantes.
L'opérateur amène le dispositif de montage 1 muni de son système d'accrochage 3 à proximité de la poulie 20 autour de laquelle il veut installer la courroie. Il se saisit de la tête 6 du levier 5 de commande, et provoque alors le coulissement dudit levier 5 en exerçant un effort de traction suffisant pour comprimer un peu plus le ressort 15. Les bâtonnets 19 se déplacent vers l'intérieur de la chambre 14, comme le montre la flèche, libérant ainsi les billes 9. Le contour externe du système d'accrochage 3 se réduit, en n'étant plus représenté que par celui des lobes 4. Ledit système 3 peut alors être inséré dans des évidements de la poulie 20 prévus pour recevoir les lobes 4. En se référant à la figure 9, une fois que le système 3 a pénétré dans la poulie 20, l'opérateur relâche la pression sur le levier 5 de commande qui, sous l'effet du ressort 15, coulisse pour retrouver sa position d'équilibre, en faisant émerger les billes 9 à l'intérieur de ladite poulie 20. Le dispositif de montage est fixé à la poulie 20. L'opérateur place alors la courroie autour dudit dispositif de montage 1, et, par l'intermédiaire d'un outil externe faisant bras de levier, effectue une rotation du dispositif 1 pour permettre à la courroie élastique de venir s'enrouler autour de la poulie 20. Une fois l'opération terminée, l'opérateur tire à nouveau sur le levier 5 de commande pour libérer les billes 9, et donc retirer le dispositif de montage 1 de la poulie 20.

## Revendications

1. Dispositif (1) de montage d'une courroie élastique autour d'une poulie (20), comprenant des moyens mécaniques (2) de guidage et de glissement de la courroie vers la poulie (20), ledit dispositif (1) étant constitué par une pièce autonome apte à venir se fixer sur ladite poulie (20) et comprenant un système d'accrochage (3) muni de butées périphériques (9), aptes à être libérées sous l'effet de l'actionnement d'un levier (5) de commande, pour permettre l'insertion dudit système (3) dans la poulie (20), **caractérisé en ce que** le levier (5) est solidaire du système d'accrochage (3) et peut être déplacé par un coulissement le long de son axe longitudinal, à partir d'une position d'équilibre, pour laquelle les butées sont sorties et **en ce que** le système d'accrochage (3) est doté de moyens de rappel (15) permettant au levier (5) de revenir à sa position d'équilibre, ladite action ayant pour effet de faire émerger les butées (9) du contour du système d'accrochage (3).

2. Dispositif selon la revendication 1, **caractérisé en ce que** les moyens de rappel sont constitués par un ressort (15).

3. Dispositif selon l'une quelconque des revendications précédentes, **caractérisé en ce que** le levier (5) de commande comprend un corps cylindrique (11) possédant, à l'une de ses extrémités, une tête élargie (6) permettant de manipuler ledit levier (5), et possédant à son autre extrémité un embout (12) élargi tronconique.

4. Dispositif selon la revendication 3, **caractérisé en ce que** les butées sont constituées par des billes (9), dont chacune est située à l'extrémité d'un canal (7) dans lequel est placée une pièce relais (19) de forme allongée, lesdits canaux (7) étant situés dans un même plan transversal et disposés en position radiale par rapport à l'axe longitudinal (8) du levier (5), le levier (5) et lesdits canaux (7) étant agencés de sorte que chaque pièce relais (19) est à la fois au contact d'une bille (9) et de l'embout (12) élargi tronconique dudit levier (5).

5. Dispositif selon la revendication 4, **caractérisé en ce que** chaque canal (7) se termine par une partie évasée (17) dans laquelle est logée la bille, ladite partie évasée (17) présentant un étranglement distal (18), dont la largeur est inférieure au diamètre de la bille (9).

6. Dispositif selon l'une quelconque des revendications 4 ou 5, **caractérisé en ce que** le système d'accrochage (3) comporte trois billes (9) situées à l'extrémité de trois canaux (7) équitablement répartis autour d'un cercle et faisant entre eux un angle de 120°.

7. Dispositif selon la revendication 6, **caractérisé en ce que** le système d'accrochage comprend trois lobes (4) aptes à venir s'insérer dans des évidements de la poulie (20), lesdits lobes (4) étant traversés chacun par un canal (7) radial possédant à son extrémité une bille (9).

8. Dispositif selon l'une quelconque des revendications 4 à 7, **caractérisé en ce que** les billes (9) et les pièces relais sont en acier.

## Claims

1. Device (1) for fitting an elastic belt around a pulley (20), comprising mechanical means (2) for guiding and slipping the belt in the direction of the pulley (20), the said device (1) consisting of a stand-alone part able to be attached to the said pulley (20) and comprising a fastening system (3) equipped with peripheral stops (9) that can be released under the effect of the actuating of a control lever (5) so as to allow the said system (3) to be inserted in the pulley (20), **characterized in that** the lever (5) is secured to the attachment system (3) and can be moved in sliding along its longitudinal axis, from a position of equilibrium in which the stops are out and **in that** the attachment system (3) is provided with return means (15) allowing the lever (5) to return to its position of equilibrium, the said action having the effect of causing the stops (9) to emerge from the contour of the attachment system (3).

2. Device according to Claim 1, **characterized in that** the return means consist of a spring (15).

3. Device according to any one of the preceding claims, **characterized in that** the control lever (5) comprises a cylindrical body (11) which, at one of its ends, has a widened head (6) allowing said lever (5) to be handled and at its other end has a widened frustoconical endpiece (12).

4. Device according to Claim 3, **characterized in that** the stops consist of balls (9) each of which is situated at the end of a passage (7) in which a relay piece (19) of elongate shape is placed, the said passage (7) being all situated in one and the same transverse plane and arranged in a radial position with respect to the longitudinal axis (8) of the lever (5), the lever (5) and the said passages (7) being arranged in such a way that each relay piece (19) is both in contact with ball (9) and with the widened frustoconical endpiece (12) of the said lever (5).

5. Device according to Claim 4, **characterized in that** each passage (7) ends in a widened part (17) in which the ball is housed, the said widened part (17) having a distal restriction (18) the width of which is smaller than the diameter of the ball (9).

6. Device according to either one of Claims 4 and 5, **characterized in that** the fastening system (3) comprises three balls (9) situated at the ends of three passages (7) evenly distributed around a circle and 120° apart.

7. Device according to Claim 6, **characterized in that** the attachment system comprises three lobes (4) able to be inserted into recesses in the pulley (20), a radial passage (7) with a ball (9) at its end passing through each of the said lobes (4).

8. Device according to any one of Claims 4 to 7, **characterized in that** the balls (9) and the relay pieces are made of steel.

## Patentansprüche

1. Vorrichtung (1) zur Montage eines elastischen Riemens um eine Riemenscheibe (20), die mechanische Einrichtungen (2) zum Führen und für den Schlupf des Riemens zur Riemenscheibe (20) enthält, wobei die Vorrichtung (1) aus einem autonomen Bauteil besteht, das an der Riemenscheibe (20) befestigt werden kann und ein Befestigungssystem (3) enthält, das mit Umfangsanschlägen (9) versehen ist, die unter der Wirkung der Betätigung eines Steuerhebels (5) freigegeben werden können, um das Einführen des Systems (3) in die Riemenscheibe (20) zu erlauben, **dadurch gekennzeichnet, dass** der Hebel (5) fest mit dem Befestigungssystem (3) verbunden ist und durch ein Gleiten entlang seiner Längsachse ausgehend von einer Gleichgewichtsstellung verschoben werden kann, in der die Anschläge ausgetreten sind, und dass das Befestigungssystem (3) mit Rückstelleinrichtungen (15) versehen ist, die es dem Hebel (5) ermöglichen, in seine Gleichgewichtsstellung zurückzukommen, wobei die Betätigung zur Wirkung hat, die Anschläge (9) aus dem Umriss des Befestigungssystems (3) hervortreten zu lassen.

2. Vorrichtung nach Anspruch 1, **dadurch gekennzeichnet, dass** die Rückstelleinrichtungen aus einer Feder (15) bestehen.

3. Vorrichtung nach einem der vorhergehenden Ansprüche, **dadurch gekennzeichnet, dass** der Steuerhebel (5) einen zylindrischen Körper (11) enthält, der an einem seiner Enden einen verbreiterten Kopf (6) besitzt, der es ermöglicht, den Hebel (5) zu betätigen, und an seinem anderen Ende einen verbreiterten kegelstumpfförmigen Aufsatz (12) besitzt.

4. Vorrichtung nach Anspruch 3, **dadurch gekennzeichnet, dass** die Anschläge aus Kugeln (9) bestehen, von denen jede sich am Ende eines Kanals (7) befindet, in dem ein Relaisbauteil länglicher Form (19) angeordnet ist, wobei die Kanäle (7) sich in der gleichen Querebene befinden und in radialer Stellung bezüglich der Längsachse (8) des Hebels (5) angeordnet sind, wobei der Hebel (5) und die Kanäle (7) so angeordnet sind, dass jedes Relaisbauteil (19) sowohl mit einer Kugel (9) als auch mit dem verbreiterten kegelstumpfförmigen Aufsatz (12) des Hebels (5) in Kontakt steht.

5. Vorrichtung nach Anspruch 4, **dadurch gekennzeichnet, dass** jeder Kanal (7) in einem erweiterten Bereich (17) endet, in dem die Kugel angeordnet ist, wobei der erweiterte Bereich (17) eine distale Verengung (18) aufweist, deren Breite geringer als der Durchmesser der Kugel (9) ist.

6. Vorrichtung nach einem der Ansprüche 4 oder 5, **dadurch gekennzeichnet, dass** das Befestigungssystem (3) drei Kugeln (9) aufweist, die sich am Ende von drei Kanälen (7) befinden, die gleichmäßig um einen Kreis verteilt sind und zueinander einen Winkel von 120° bilden.

7. Vorrichtung nach Anspruch 6, **dadurch gekennzeichnet, dass** das Befestigungssystem drei Lappen (4) aufweist, die sich in Aussparungen der Riemenscheibe (20) einfügen können, wobei die Lappen (4) je von einem radialen Kanal (7) durchquert werden, der an seinem Ende eine Kugel (9) besitzt.

8. Vorrichtung nach einem der Ansprüche 4 bis 7, **dadurch gekennzeichnet, dass** die Kugeln (9) und die Relaisbauteile aus Stahl sind.
